## Europäisches Patentamt

## European Patent Office

## Office européen des brevets

(11) Veröffentlichungsnummer : **0 178 424 B1**

(12) # EUROPÄISCHE PATENTSCHRIFT

(45) Veröffentlichungstag der Patentschrift :
**30.01.91 Patentblatt 91/05**

(51) Int. Cl.⁵ : **G06F 7/52**

(21) Anmeldenummer : **85110468.7**

(22) Anmeldetag : **20.08.85**

(54) **Zellenstrukturierter digitaler Multiplizierer mit semisystolischem Aufbau.**

(30) Priorität : **17.09.84 DE 3434085**

(43) Veröffentlichungstag der Anmeldung :
**23.04.86 Patentblatt 86/17**

(45) Bekanntmachung des Hinweises auf die
Patenterteilung :
**30.01.91 Patentblatt 91/05**

(84) Benannte Vertragsstaaten :
**AT BE CH DE FR GB IT LI NL SE**

(56) Entgegenhaltungen :
**FR-A- 2 540 261**

(56) Entgegenhaltungen :
**IEEE JOURNAL OF SOLID-STATE CIRCUITS,
Band SC-18, Nr. 3, Juni 1983, Seiten 280-285,
IEEE, New York, US; P. DRAHEIM: "Digital
signal processing for video applications"
THE RADIO AND ELECTRONIC ENGINEER,
Band 45, Nr. 3, März 1975, Seiten 116-120,
London, GB; P.M. THOMPSON et al.: "Digital
arithmetic units for a high data rate"**

(73) Patentinhaber : **Siemens Aktiengesellschaft
Wittelsbacherplatz 2
D-8000 München 2 (DE)**

(72) Erfinder : **Noll, Tobias, Dipl.-Ing.
Richard-Strauss-Strasse 32
D-8000 München 80 (DE)**

**Beschreibung**

Die Erfindung bezieht sich auf einen zellenstrukturierten digitalen Multiplizierer mit semisystolischem Aufbau nach dem Oberbegriff des Patentanspruchs 1.

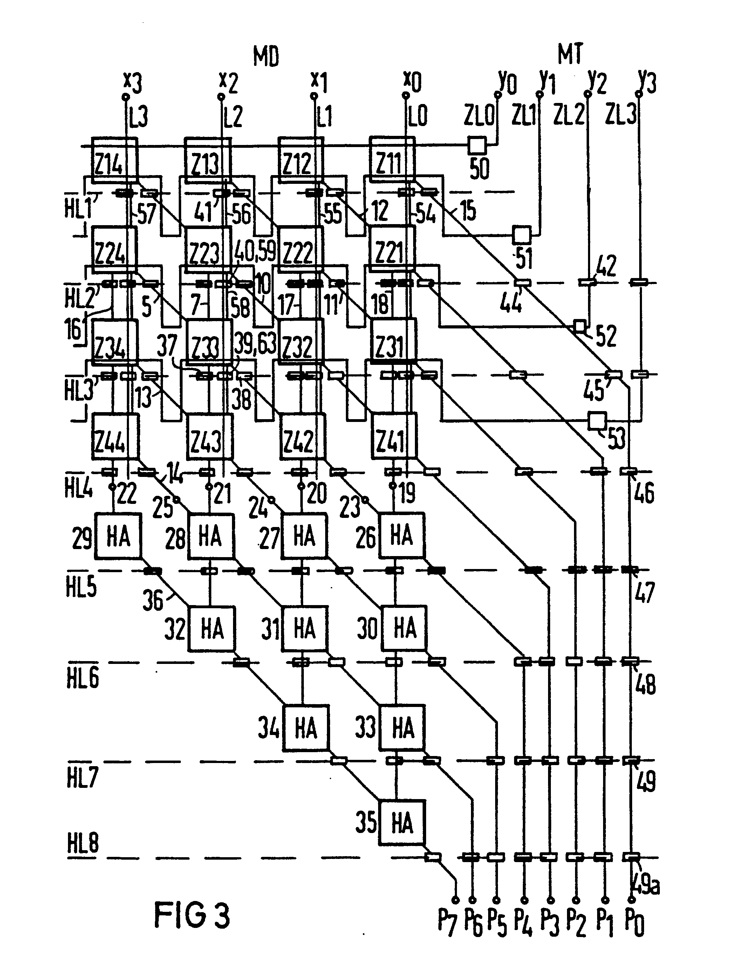

Ein Multiplizierer dieser Art ist aus dem IEEE Journal of Solid-State Circuits Vol. SC-18 (1983) No. 3, Seiten 280 bis 285, insbesondere Fig.7 sowie aus den IEEE Transactions on Computers Vol. C-27 (1978), Seiten 855 - 865, insbesondere Fig. 7(b), bekannt. Nachteilig ist hierbei, daß die zweiten Eingangsleitungen, über die jeweils ein Multiplikatorbit sämtlichen Zellen einer Zeile zugeführt wird, insbesondere bei Multiplikanden mit großen Wortbreiten mit Treiberschaltungen versehen werden müssen, deren Laufzeiten zusammen mit den Laufzeiten der zwischen den Treiberschaltungen und den betreffenden Zellen befindlichen Teile der zweiten Eingangsleitungen die Zuführung des Multiplikatorbits empfindlich verzögern. Hierdurch ergibt sich eine wesentliche Erhöhung der Stufenlaufzeit, die zwischen der Abgabe der Summen- und Übertragssignale an den Ausgängen der Schieberegisterstufen einer Zeile und der Abgabe entsprechender Signale an den Ausgängen der Schieberegisterstufen der nächsten Zeile vergeht.

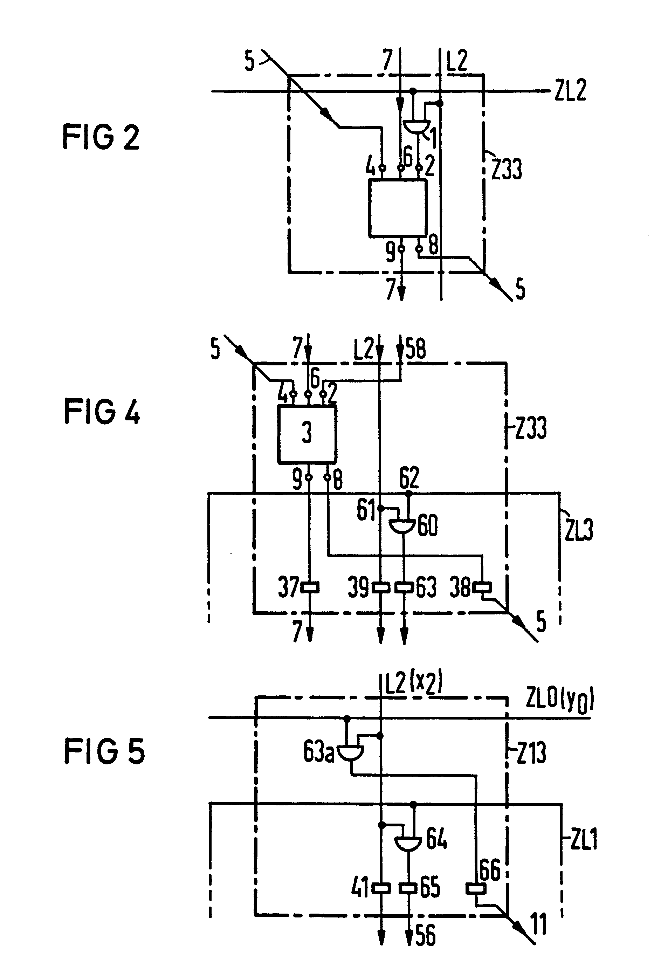

Andererseits ist aus "The Radio and Electronic Engineer", Vol. 45 (1975), No. 3, Seiten 116 - 120, insbesondere Fig. 5, eine vollsystolische Multipliziervorrichtung bekannt, bei der jede einzelne Zelle in eine erste Teilzelle, die ein partialproduktbildendes Verknüpfungsglied enthält, und in eine zweite Teilzelle, die den Volladdierer enthält, aufgeteilt wird. Beide Teilzellen sind durch eine Verbindungsleitung miteinander verbunden, die an den Ausgang des Verknüpfungsgliedes und an einen Eingang des Volladdierers geschaltet ist. In diese Verbindungsleitung ist eine Schieberegisterstufe eingefügt, die zur Zwischenspeicherung des im Verknüpfungsglied gebildeten Partialproduktes dient. Bei einer vollsystolischen Multipliziervorrichtung werden die Multiplikatorbits allen Zellen einer Zeile jeweils einzeln nacheinander im zeitlichen Abstand einer oder mehrerer Taktimpulsperioden zugeführt.

Der Erfindung liegt die Aufgabe zugrunde, einen zellenstrukturierten Multiplizierer der eingangs angedeuteten Art anzugeben, bei dem die genannte Verzögerung bei der Zuführung der Multiplikatorbits die Stufenlaufzeit nicht nachteilig beeinflußt. Das wird erfindungsgemäß durch eine Ausbildung des Multiplizierers nach dem kennzeichzeichnenden Teil des Patentanspruchs 1 erreicht.

Der mit der Erfindung erzielbare Vorteil liegt insbesondere darin, daß die Verzögerung, die bei der Zuführung eines Multiplikatorbits zu den Zellen einer betrachteten Zeile auftritt, während der Stufenlaufzeit erfolgt, die für die in der vorhergehenden Zeile zusammengefaßten Zellen vorgesehen ist. Innerhalb dieser Stufenlaufzeit erfolgt auch die Bildung und Zwischenspeicherung der Partialproduktbits für die betrachtete Zeile. Daher können der betrachteten Zeile sowohl die benötigten, in Registerstufen zwischengespeicherten Summensignale und Übertragssignale der Zellen der vorhergehenden Zeile als auch die in anderen Registerstufen dieser vorhergehenden Zeile zwischengespeicherten, der betrachteten Zeile zugeordneten Partialproduktbits gleichzeitig zugeführt werden, so daß die Stufenlaufzeit der betrachteten Zeile auf die Verarbeitungszeit der in ihr befindlichen Volladdierer reduziert wird. Entsprechendes gilt für die Stufenlaufzeiten sämtlicher Zeilen.

Die Patentansprüche 2 bis 6 sind auf bevorzugte Ausgestaltungen und Weiterbildungen der Erfindung gerichtet.

Die Erfindung wird nachfolgend anhand der Zeichnung näher erläutert. Dabei zeigt :

Fig. 1 das Blockschaltbild eines bekannten zellenstrukturierten digitalen Multiplizierers mit semisystolischem Aufbau,

Fig. 2 das Blockschaltbild einer Zelle des Multiplizierers nach Fig. 1,

Fig. 3 das Blockschaltbild eines erfindungsgemäß ausgebildeten Multiplizierers,

Fig. 4 das Blockschaltbild einer Zelle des Multiplizierers nach Fig. 3,

Fig. 5 eine vereinfachte Zelle des Multiplizierers nach Fig. 3 und

Fig. 6 eine schaltungstechnische Durchbildung der Zelle nach Fig. 4.

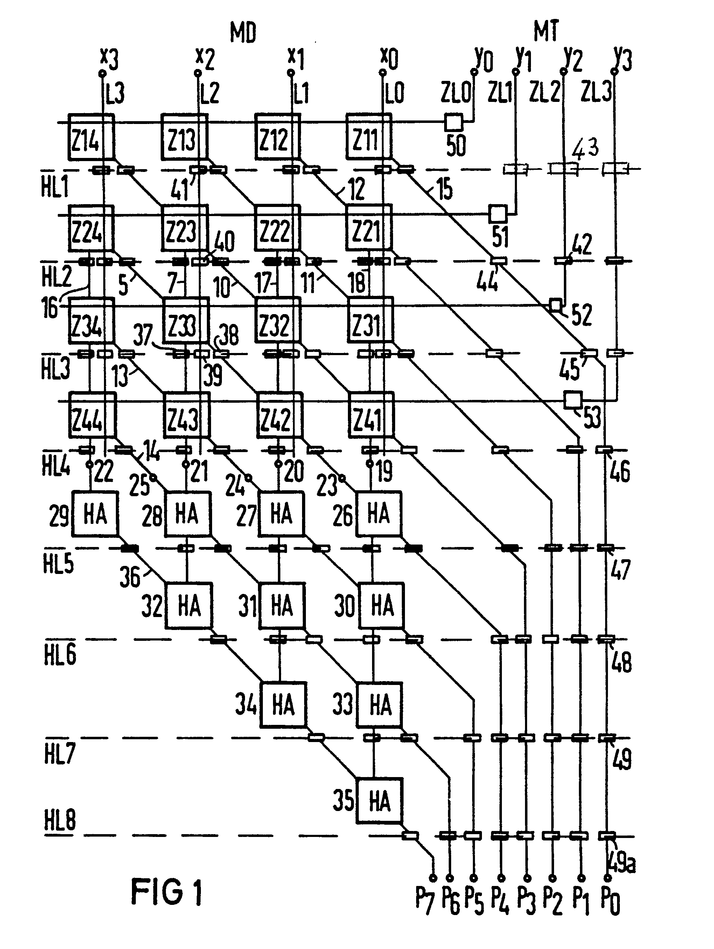

Das in Fig. 1 dargestellte Blockschaltbild entspricht im wesentlichen dem bekannten Multiplizierer nach Fig. 7(b) des obengenannten IEEE-Aufsatzes. Hierbei sind erste Eingangsleitungen L0 bis L3 vorgesehen, deren obere Anschlüsse mit den Bits $x_0$ bis $x_3$ eines als Binärsignal vorliegenden Multiplikanden MD belegt sind. Dabei stellt $x_0$ das niedrigstwertige Bit von MD dar. Zweite Eingangsleitungen ZL0 bis ZL3 sind an ihren oberen Anschlüssen mit den Bits $y_0$ bis $y_3$ eines ebenfalls als Binärsignal vorliegenden Multiplikators MT beschaltet, wobei $y_0$ das niedrigstwertige Bit bedeutet. Mit Z11 bis Z14 sind vier in einer ersten Zeile zusammengefaßten Zellen des Multiplizierers bezeichnet. Dabei wird in Z11 das Bit $x_0$ mit dem Bit $y_0$ UND-verknüpft, in Z12 die Bits $x_1$ mit $y_0$, in Z13 die Bits $x_2$ mit $y_0$ und in Z14 die Bits $x_3$ mit $y_0$. In Fig. 1 werden diese Verknüpfungen durch die Kreuzungsstellen der Leitungen L0 bis L3 mit der Leitung ZL0 angedeutet. Die Verknüpfungsergebnisse, die entweder den logischen Wert 0 oder 1 aufweisen, werden als eine erste Gruppe von Partialproduktbits bezeichnet. In einer zweiten Zeile sind vier weitere Zellen Z21 bis Z24 vorgesehen, in denen UND-Verknüpfungen von $x_0$ mit $y_1$, $x_1$ mit $y_1$, $x_2$ mit $y_1$ und $x_3$ mit $y_1$ erfolgen, was wieder durch die Kreuzungsstellen der Leitungen L0 bis L3 und ZL1 angedeutet wird. Die letzteren Verknüpfungsergebnisse stellen eine zweite Gruppe von Partialproduktbits dar. In analoger Weise werden in zwei weiteren Zeilen, die jeweils die Zellen Z31 bis Z34 und Z41 bis Z44 enthalten, zwei weitere Gruppen von Partialproduktbits gebildet.

Der Aufbau einer dieser im wesentlichen untereinander gleichartig ausgebildeten Zellen, z.B. von Z33, der auch der Fig. 4 auf Seite 862 des genannten Aufsatzes entnommen werden kann, sei anhand von Fig. 2 näher erläutert. Dabei sind die Leitungen L2 und ZL2, die im Bereich von Z33 einen Kreuzungspunkt aufweisen, mit den zwei Eingängen eines UND-Gliedes 1 verbunden, dessen Ausgang an den Eingang 2 eines Volladdierers 3 gelegt ist. Ein anderer Eingang 4 des Volladdierers 3 ist mit dem Teil eines weiter unten näher beschriebenen Summenpfades 5 beschaltet, über den ein Summensignal empfangen wird. Weiterhin ist ein dritter Eingang 6 von 3 mit dem Teil eines ebenfalls weiter unten eingehener behandelten Übertragspfades 7 verbunden, über den ein Übertragssignal empfangen wird. Der Summenausgang 8 von 3 ist mit einem zweiten Teil des Summenpfades 5 beschaltet, über den ein Summensignal abgegeben wird. Schließlich ist der Übertragsausgang 9 von 3 mit einem zweiten Teil des Übertragspfades 7 beschaltet, über den ein Übertragssignal abgegeben wird.

Der Summenpfad 5 verläuft gemäß Fig. 1 über die Zellen Z24, Z33 und Z42. Weitere Summenpfade sind mit 10 bis 14 bezeichnet und verlaufen jeweils über Z14, Z23, Z32 und Z41, über Z13, Z22 und Z31, über Z12 und Z21, über Z34 und Z43 bzw. über Z44. Ein mit 15 bezeichneter Pfad kann ebenfalls als Summenpfad aufgefaßt werden, verläuft aber nur über die Zelle Z11. Die Zellen Z11 bis Z14 können insofern einfacher ausgebildet sein als die übrigen Zellen, als sie keinen Volladdierer enthalten müssen. Bei ihnen kann der Ausgang des UND-Gliedes 1 jeweils mit einem am rechten unteren Punkt angeschlossenen Teil eines Summenpfades verbunden sein, über den ein Signal abgegeben wird. Jedes der eingezeichneten Teilstücke der Summenpfade 5 und 10 bis 13 bedeutet, daß das an der rechten unteren Ecke einer Zelle austretende Signal dem linken oberen Eckpunkt der nächsten auf dem betreffenden Summenpfad liegenden Zelle und damit dem Eingang 4 ihres Volladdierers 3 zugeführt wird.

Der Übertragspfad 7 verläuft in Fig. 1 über die Zellen Z23, Z33 und Z43. Weitere Übertragspfade sind mit 16 bis 18 bezeichnet und verlaufen jeweils über die Zellen Z24, Z34 und Z44, über die Zellen Z22, Z32 und Z42 bzw. über die Zellen Z21, Z31 und Z41. Jedes der eingezeichneten Teilstücke dieser Übertragspfade bedeutet, daß ein an der unteren Begrenzung einer Zelle abgegebenes, vom Übertragsausgang 9 dieser Zelle stammendes Übertragssignal der oberen Begrenzung der nächsten auf dem Pfad liegenden Zelle und von dort dem Eingang 6 ihres Volladdierers 3 zugeführt wird.

An den unteren Enden der Summenpfade 15, 12, 11 und 10 sind die niedrigerwertigen Produktbits $P_0$ bis $P_3$ direkt abgreifbar. Die höherwertigen Produktbits werden aus den an den endseitigen Anschlüssen 19 bis 22 der Übertragspfade 18, 17, 7 und 16 und an den endseitigen Anschlüssen 23 bis 25 der Summenpfade 5, 13 und 14 auftretenden Signalen zusammengesetzt. Zu diesem Zweck sind Additionsstufen 26 bis 35 vorgesehen, von denen die Stufen 26 bis 29 jeweils über die verlängerten Übertragspfade 18, 17, 7 und 16 mit den Zellen Z41 bis Z44 in Verbindung stehen. Der verlängerte Übertragspfad 7 verbindet außerdem die Stufen 28 und 32 miteinander, der verlängerte Übertragspfad 17 die Stufen 27, 31 und 34 und der verlängerte Übertragspfad 18 die Stufen 26, 30, 33 und 35. Außerdem verläuft der verlängerte Summenpfad 5 über die Stufe 26, der verlängerte Summenpfad 13 über die Stufen 27 und 30, der verlängerte Summenpfad 14 über die Stufen 28, 31 und 33 sowie ein weiterer Summenpfad 36 über die Stufen 29, 32, 34 und 35. Dabei bedeutet jedes Teilstück eines verlängerten Übertragspfades, daß ein Übertragssignal an der unteren Begrenzung einer Additionsstufe und damit am Übertragsausgang des in ihr befindlichen Addierers abgegriffen wird und der oberen Begrenzung der jeweils nächsten auf dem Übertragspfad liegenden Additionsstufe und von dort dem einen Eingang des in ihr befindlichen Addierers zugeführt wird. Andererseits bedeutet jedes Teilstück eines der verlängerten Summenpfade, daß an der rechten unteren Ecke einer Stufe ein am Summenausgang des in ihr befindlichen Addierers auftretende Summensignal abgegriffen und der nächsten auf dem Summenpfad liegenden Additionsstufe über die linke obere Ecke ihrer Begrenzung einem Eingang des in ihr befindlichen Addierers zugeführt wird. Da den Stufen 26 bis 35 nur höchstens zwei Eingangssignale zugeführt werden, können ihre Addierer als Halbaddierer ausgebildet sein, was durch die Bezeichnung HA angedeutet ist. An den unteren Enden der Summenpfade 5, 13, 14 und 36 sind dann die Produktbits $P_4$ bis $P_7$ abgreifbar.

In Fig. 1 sind in den Summen- und Übertragsausgängen, z.B. 8 und 9 (Fig. 2), der einzelnen Zellen, z.B. Z33, jeweils Schieberegisterstufen, z.B. 37 und 38, vorgesehen, in denen die abgegebenen Summen- und Übertragssignale jeweils zwischengespeichert werden. Außerdem sind weitere Schieberegisterstufen, z.B. 39, in die Eingangsleitungen L0 bis L3 so eingefügt, daß vor jeder Abzweigung, einer solchen Leitung, die sich im Bereich einer Zelle, z.B. Z33, befindet, eine der Anzahl der vorhergehenden Zeilen entsprechende Anzahl von Registerstufen eingefügt ist. Im betrachteten Fall der Abzweigung der Zelle Z33 handelt es sich also um eine in der dritten Zeile befindliche Zelle, so daß zwei vorhergehende Zeilen vorhanden sind. Dementsprechend liegen zwei weitere Schieberegisterstufen 40 und 41 in dem Teil von L2, der sich oberhalb der Abzweigung 39a für Z33 befindet. In analoger Weise sind auch in die zweiten Eingangsleitungen, z.B. ZL2, von denen jede einer bestimmten Zeile von Zellen, z.B. Z31 bis Z34, zugeordnet ist, so viele Schieberegisterstufen, z.B. 42 und 43, eingefügt, wie der Anzahl der vorhergehenden Zeilen entspricht. Da die Eingangsleitung ZL2 im betrachteten Fall den in der dritten Zeile befindlichen Zellen Z31 bis Z34 zugeordnet ist, enthält sie demnach zwei Schieberegisterstufen 42 und 43. Die Schieberegisterstufen, z.B. 37 und 38, an den Ausgängen der einzelnen Zellen, z.B. Z33, sowie die weiteren Schieberegisterstufen, z.B. 39, an den ersten Eingangsleitungen werden zweckmäßigerweise in die einzelnen Zellen, z.B. Z33, einbezogen, obwohl sie aus Gründen einer übersichtlichen Darstellung in Fig. 1 außerhalb der Zellen dargestellt sind.

Fig. 1 zeigt horizontal verlaufende, gestrichelte Linien HL1 bis HL4, die jeweils die Lage der Schieberegisterstufen an den Ausgängen der Zellen in den einzelnen Zeilen andeuten. Die Schieberegisterstufen werden nun so getaktet, daß alle an den Ausgängen der Zellen, z.B. Z11 bis Z14, einer Zeile auftretenden und an den durch HL1 angedeuteten Schieberegisterstufen zwischengespeicherten Signale innerhalb einer Taktperiode an die nächste Zeile von Zellen, z.B. Z21 bis Z24, übertragen werden, innerhalb der nächsten Taktperiode dann die an den Ausgängen dieser Zeile auftretenden Signale an die darauf folgende Zeile, z.B. Z31 bis Z34, usw.. Da auch die Additionsstufen 26 bis 35 durch entsprechende mit den Linien HL5 bis HL8 angedeutete Schieberegisterstufen in das Taktschema einbezogen sind, stehen die Produktbits $P_0$ bis $P_7$ erst nach der erfolgten Signalübertragung über die Linie HL8 zur Verfügung. Wegen der weiteren Schieberegisterstufen, z.B. 42 und 43, in den zweiten Eingangsleitungen ZL0 bis ZL3 sowie der getakteten Weitergabe der Produktbits, z.B. $P_0$, mittels der in die Summenpfade, z.B. 15, eingefügten Schieberegisterstufen, z.B. 44 bis 49a, befinden sich alle zur Produktbildung aus MD und MT benötigten Signale in Abhängigkeit von der jeweils betrachteten Taktperiode immer nur zwischen zwei aufeinanderfolgenden horizontalen Linien, z.B. HL3 und HL4, so daß sich in vertikaler Richtung von Fig. 1 jeweils nur einander benachbarte Teile der Schaltung gegenseitig beeinflussen. Diese Eigenschaft entspricht einem sog. systolischen Schaltungsaufbau in vertikaler Richtung. Da jedoch in horizontaler Richtung die Bits, z.B. $y_2$, von MT sämtlichen Zellen einer Zeile, z.B. Z31 bis Z34, innerhalb einer solchen Taktperiode zugeführt werden, spricht man von einem semisystolischem Aufbau.

Wegen des semisystolischen Aufbaus entsteht das obengenannte Problem, daß die Zuführung eines Multiplikatorbits durch in die Leitungen ZL0 bis ZL3 eingefügte Treiberschaltungen 50 bis 53 und die horizontalen Teile dieser Leitungen, insbesondere bei großen Wortdaß die Taktperioden entsprechend groß gewählt werden müssen. Das bedeutet aber eine entsprechend große Stufenlaufzeit der Signale zwischen zwei aufeinanderfolgenden Linien, z.B. HL2 und HL3.

Die beschriebene Taktung erlaubt es, innerhalb einer Taktperiode jeweils nur eine Schaltungsstufe, d.h. die zwischen zwei benachbarten horizontalen Linien, z.B. HL2 und HL3, befindlichen Schaltungsteile einer bestimmten Multiplikation, zB. von MD mit MT, zuzuordnen. Die anderen Stufen können gleichzeitig für weitere Multiplikationen herangezogen werden, so daß die Durchsatzrate der Schaltung (computation rate) sich entsprechend vervielfacht. Dieses Prinzip wird in der Literatur als "pipelining" bezeichnet.

Fig. 3 zeigt das Blockschaltbild eines nach der Erfindung ausgebildeten Multiplizierers. Zum Unterschied von Fig. 1 verläuft die zweite Eingangsleitung ZL1, über die das Bit $y_1$ des Multiplikators MT zugeführt wird, nicht über die Zellen Z21 bis Z24, sondern über die Zellen Z11 bis Z14. Obwohl die Partialproduktbits, die als Ergebnisse der UND-Verknüpfung zwischen $x_0$ und $y_1$, $x_1$ und $y_1$, $x_2$ und $y_1$ sowie $x_3$ und $y_1$ gebildet werden, den Zellen Z21 bis Z24 zugeordnet sind und in diesen mit den über die Summenpfade 12, 11 und 10 von den Zellen Z12, Z13 und Z14 gelieferten Summensignalen addiert werden, liegen die Kreuzungspunkte der Leitungen L0 bis L3 mit ZL1 jeweils in Bereich der Zellen Z11 bis Z14. Hieraus geht hervor, daß die Bildung der Partialproduktbits, die den Zellen Z21 bis Z24 zugeordnet sind, in den Zellen Z11 bis Z14 erfolgt. Die entstandenen Partialproduktbits werden dann über Verbindungsleitungen 54 bis 57 jeweils einem Eingang der in den Zellen Z21 bis Z24 befindlichen Volladdierer zugeführt. Zweite Eingänge dieser Volladdierer sind entsprechend Fig. 1 mit den über die Summenpfade 12, 11 und 10 erhaltenen Summensignalen belegt. Die Bildung der Partialproduktbits, die nach Fig. 1 in den Zellen Z21 bis Z24 erfolgt, wird also bei einem Multiplizierer nach Fig. 3 den Zellen Z11 bis Z14 und damit der vorhergehenden Zeile zugewiesen.

In analoger Weise finden auch die Bildungen der Partialproduktbits, die gemäß Fig. 1 in der dritten und vierten Zeile erfolgen, nach Fig. 3 jeweils in der zweiten und dritten Zeile statt, was durch den Verlauf der Leitungen ZL2 und ZL3 angedeutet ist, deren Kreuzungspunkte mit den Leitungen L0 bis L3 jeweils in den Zellen der zweiten und dritten Zeile liegen.

Ganz allgemein wird in Fig. 3 das Partialproduktbit, das in einer bestimmten Zelle, z.B. Z33, mit den dieser Zelle über einen Summenpfad, z.B. 5, und einen Übertragspfad, z.B. 7, zugeführten Summen- und Übertragssignalen addiert werden soll, in der entsprechenden Zelle, z.B. Z23, der vorhergehenden Zeile durch UND- Verknüpfung gebildet, wobei das Verknüpfungsergebnis über eine Verbindungsleitung, z.B. 58, der betrachteten Zelle zugeführt wird. Hierdurch gelingt es, die bei der Zuführung eines Multiplikatorbits, zB. $y_2$, und bei der Bildung des Partialproduktbits auftretende Verzögerung, die sich in erster Linie aus den Laufzeiten einer Treiberschaltung, z.B. 52, und des horizontal gezeichneten Teil der betreffenden Eingangsleitung, z.B. ZL2, ergibt, in die Stufenlaufzeit der Teilschaltung zwischen den Linien HL1 und HL2 zu verlegen. In die Verbindungsleitung, z.B. 58, ist eine Schieberegisterstufen, z.B. 59, eingefügt, die jeweils der Zelle der vorhergehenden Zeile, z.B. Z23, zugeordnet werden kann. Sie ist in Fig. 3 lediglich aus Gründen der deutlichen Darstellung außerhalb von Z23 angedeutet. Wesentlich ist, daß die Schieberegisterstufe 59 zusammen mit den übrigen an den Ausgängen der Zellen Z21 bis Z24 liegenden Schieberegisterstufen zugleich getaktet wird, was durch die Linie HL2 angedeutet ist.

Die Zellen Z11 bis Z34, d.h. sämtliche Zellen der ersten drei Zeilen, weisen gemäß Fig. 3 Ausgänge für Verbindungsleitungen, z.B. 58, auf, die an Eingänge der Volladdierer der jeweils entsprechenden Zellen der nächstfolgenden Zeile geführt sind. An allen diesen Ausgängen sind Schieberegisterstufen, z.B. 59, vorgesehen, die dafür sorgen, daß den Zellen Z21 bis Z44 die ihnen zugeordneten Partialproduktbits zugleich mit den Summen- und Übertragssignalen der jeweils vorhergehenden Zeile zugeführt werden. Damit reduzieren sich die Stufenlaufzeiten der aus den Zellen Z21 bis Z24 gebildeten zweiten Zeile, der aus den Zellen Z31 bis Z34 gebildeten dritten Zeile und der aus Z41 bis Z44 gebildeten vierten Zeile jeweils auf die Verarbeitungszeiten der in ihnen enthaltenen Volladdierer. Da die genannten Verzögerungen bei der Zuführung der Multiplikatorbits in die Stufenlaufzeiten der jeweils vorhergehenden Zeilen fallen, treten sie überhaupt nicht mehr in Erscheinung, so lange sie nicht eine Volladdiererlaufzeit überschreiten. Das könnte jedoch nur bei so großen Wortbreiten des Multiplikanden MD eintreten, daß dieser Fall praktisch bedeutungslos ist.

Die übrigen Teile der Fig. 3 sind bereits anhand der Fig. 1 beschrieben worden und tragen die auch dort verwendeten Bezugszeichen.

Fig. 4 zeigt eine nach der Erfindung ausgebildete Zelle, z.B. Z33, des Multiplizierers nach Fig. 3. Entsprechend Fig. 2 ist auch hier ein Volladdierer 3 mit Eingängen 2, 4 und 6, einem Summenausgang 8 und einem Übertragsausgang 9 vorgesehen. Der Eingang 2 ist dabei mit der Verbindungsleitung 58 beschaltet, der Eingang 4 mit dem Summenpfad 5 und der Eingang 6 mit dem Übertragspfad 7. Der Summenausgang 8 ist mit dem nächsten Teilstück des Summenpfades 5 verbunden, der Übertragsausgang 9 mit dem nächsten Teilstück des Übertragspfades 7. Der eine Eingang eines UND-Gliedes 60 ist im Schaltungspunkt 61 mit der Eingangsleitung L2 verbunden, der andere Eingang im Schaltungspunkt 62 mit der Eingangsleitung ZL3. Die Schieberegisterstufen 37, 38 und 39 sind in Fig. 4 in die Zelle Z33 einbezogen. Ebenso ist eine Schieberegisterstufe 63, die in der an den Ausgang von 60 geschalteten, zum Eingang 2 der Zelle Z43 führenden Verbindungsleitung liegt, als Bestandteil der Zelle Z33 dargestellt.

Fig. 5 zeigt das Blockschaltbild einer der untereinander gleichartig ausgebildeten Zellen Z11 bis Z14 von Fig. 3, z.B. das der Zelle Z13. Aus den Bits $x_2$ und $y_0$ wird in dem UND-Glied 63a ein Partialproduktbit gebildet, das entweder einer logischen 1 oder einer logischen 0 entspricht. Dieses wird über den Summenpfad 11 an die Zelle Z22 abgegeben. Da keine Summen- oder Übertragssignale zugeführt werden, kann ein Volladdierer entfallen. Für die Bildung des in Z23 benötigten Partialproduktbits ist ein UND-Glied 64 vorgesehen, dessen Eingänge jeweils mit den Leitungen ZL2 und ZL1 beschaltet sind. Der Ausgang von 64 ist mit der Verbindungsleitung 56 beschaltet, die an einen Eingang des Volladdierers von Z23 geführt ist. Neben der bereits beschriebenen Schieberegisterstufe 41 sind weitere derartige Stufen 65 und 66 in die Verbindungsleitung 56 und den Summenpfad 11 eingefügt.

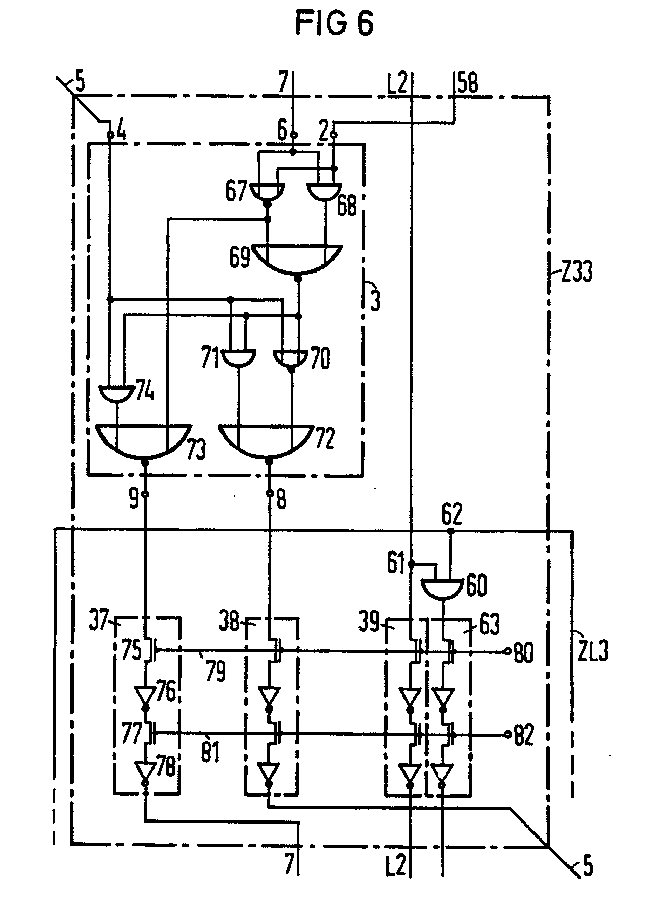

Der Fig. 6 ist eine schaltungstechnische Durchbildung der in Fig. 4 schematisch dargestellten Zelle Z33 entnehmbar. Dabei enthält der Volladdierer 3 ein NOR-Glied 67, dessen beide Eingänge an die Eingänge 2 und 6 von 3 gelegt sind. Die beiden Eingänge eines UND-Gliedes 68 sind ebenfalls an die Eingänge 2 und 6 geschaltet. Die Ausgänge von 67 und 68 sind dabei an die Eingänge eines NOR-Gliedes 69 geführt. Der Ausgang von 69 liegt an dem ersten Eingang eines NOR-Gliedes 70, dessen zweiter Eingang mit dem Eingang 4 von 3 verbunden ist. Ein UND- Glied 71 weist zwei Eingänge auf, die ebenfalls mit dem Ausgang von 69 und dem Eingang 4 beschaltet sind. Die Ausgänge von 70 und 71 sind an die beiden Eingänge eines NOR-Gliedes 72 gelegt, dessen Ausgang den Summenausgang 8 von 3 bildet. Der Ausgang des NOR-Gliedes 67 ist weiterhin an den ersten Eingang eines NOR-Gliedes 73 geführt. Schließlich ist der Ausgang eines UND-Gliedes 74, dessen Eingänge mit dem Ausgang von 69 und dem Eingang 4 von 3 verbunden sind, an den zweiten Eingang von 73 gelegt. Der Ausgang von 73 stellt dabei den invertierten Übertragsausgang 9 des Volladdierers dar.

Die Schieberegisterstufe 37 besteht im einzelnen aus der Serienschaltung eines Feldeffekttransistors 75, eines Inverters 76, eines zweiten Feldeffekttransistors 77 und eines zweiten Inverters 78, dessen Ausgang mit dem die Übertragssignale weiterleitenden Teil des Übertragspfads 7 verbunden ist. Das Gate des Transistors 75 wird über eine Leitung 79 angesteuert, die einen mit einer Taktspannung $\varnothing_M$

belegten Anschluß 80 aufweist. Analog hierzu wird das Gate von 77 über eine Leitung 81 angesteuert, die mit einem mit einer Taktspannung $\varnothing_S$ belegten Anschluß 82 versehen ist. Beim Auftreten eines Taktimpulses $\varnothing_M$ wird ein am Ausgang 9 liegendes Übertragsignal an den Eingang des Inverters 76 übertragen. Beim Auftreten eines Taktimpulses $\varnothing_S$, der mit den Taktimpulsen $\varnothing_M$ nicht zusammenfallen darf, wird dann das Übertragsignal über den Transistor 77 und den Inverter 78 an den Übertragspfad 7 abgegeben, während der Transistor 75 sperrt. Die Schieberegisterstufen 38, 39 und 63 sind entsprechend der Stufe 37 aufgebaut, wobei ihre Transistoren gemeinsam mit den Transistoren 75 und 77 über die Leitungen 79 und 81 angesteuert werden.

Die Zellen der zweiten bis vierten Zeile sind mit Vorteil entsprechend Fig. 6 ausgebildet. Dabei sind die Eingänge 4 der Zellen Z24, Z34 und Z44 mit einer logischen 0 beschaltet.

Der bisher beschriebene Multiplizierer für vierstellige Multiplikanden und Multiplikatoren stellt nur ein Ausführungsbeispiel dar, daß zur Erläuterung der Erfindung dient. Der Erfindungsgedanke ist selbstverständlich darüber hinaus auf zellenstrukturierte Multiplizierer anwendbar, die für Binärzahlen mit beliebiger Stellenzahl eingerichtet sind.

In Abweichung von dem oben beschriebenen Ausführungsbeispiel der Erfindung kann anstelle des UND-Gliedes 60 in allen Zellen zweckmäßigerweise ein NAND-Glied verwendet werden. In diesem Fall werden jeweils die invertierten Partialproduktbits an die ihnen zugeordneten Zellen weitergegeben. Mit Vorteil werden dann auch die in den Volladdierern gebildeten Übertragssignale an den Ausgängen 9 jeweils invertiert abgegeben, wobei die Inversion der empfangenen Partialproduktbits und Übertragssignale in den Volladdierern 3 entsprechend berücksichtigt wird.

Weiterhin können zum Unterschied von dem in Fig. 3 dargestellten Ausführungsbeispiel einzelne oder mehrere der horizontalen Linien HL1 bis HL8 bzw. die durch sie jeweils angedeuteten Schieberegisterstufen entfallen. Das ist dann möglich, wenn eine Taktperiode einem Vielfachen der Verarbeitungszeit eines Volladdierers 3 entspricht.

## Ansprüche

1. Zellenstrukturierter digitaler Multiplizierer mit semisystolischem Aufbau,
bei dem sämtliche Bits eines Multiplikanden mit jeweils einem Bit eines Multiplikators zu einer Gruppe von Partialproduktbits UND-verknüpft werden und für jedes Multiplikatorbit eine solche Gruppe gebildet wird,
bei dem in einer ersten Zeile angeordnete Zellen einer ersten Gruppe von Partialproduktbits individuell zugeordnet sind, die aus sämtlichen, mit dem niedrigstwertigen Multiplikatorbit jeweils UND-verknüpften Multiplikandenbits besteht,
bei dem in weiteren, nachgeordneten Zeilen liegende Zellen weiteren Gruppen von Partialproduktbits zugeordnet sind, wobei die Zellen jeder weiteren Zeile den durch eine UND-Verknüpfung sämtlicher Multiplikandenbits mit einem einzigen Multiplikatorbit gebildeten Partialprodukt bits individuell zugeordnet sind und die Wertigkeit des jeweils heangezogenen Multiplikatorbits von Zeile zu Zeile ansteigt;
bei dem erste mit den Multiplikandenbits belegte Eingangsleitungen zu den diesen zugeordneten Zellen verlaufen,
bei dem zweite mit den Multiplikatorbits belegte Eingangsleitungen vorgesehen sind, von denen jede zu sämtlichen in einer Zeile befindlichen Zellen verläuft, die dem über sie zugeführten Multiplikatorbit zugeordnet sind,
bei dem Summenpfade vorgesehen sind, die über diejenigen Zellen verlaufen, die den miteinander zu summierenden Partialproduktbits gleicher Wertigkeit zugeordnet sind,
bei dem Übertragspfade vorgesehen sind, die über diejenigen Zellen verlaufen, die miteinander zu summierenden Partialproduktbits ansteigender Wertigkeit zugeordnet sind,
bei dem in den Zellen jeweils ein Volladdierer vorgesehen ist, der zur Addition eines über einen Summenpfad zugeführten Summensignals mit gegebenenfalls einem über einen Übertragspfad zugeführten Übertragssignal und mit dem der Zelle zugeordneten Partialproduktbit dient,
bei dem in den Zellen jeweils ein Verknpüfungsglied vorgesehen ist, das zur UND-Verknüpfung eines Multiplikandenbits mit einem Multiplikatorbit dient,
bei dem in den Zellen Schieberegisterstufen enthalten sind, die dem Summenausgang und dem Übertragsausgang des Volladdierers nachgeordnet sind,
bei dem in die ersten und zweiten Eingangsleitungen weitere Schieberegisterstufen derart eingefügt sind, daß sämtliche zu den Zellen einer Zeile verlaufende Eingangsleitungen jeweils höchstens eine der Anzahl der vorhergehenden Zeilen entsprechende Anzahl von weiteren Schieberegisterstufen enthalten,
und bei dem an den Enden der Summenpfade und Übertragspfade abgreifbare digitale Signale zu Produktbits zusammengesetzt werden,
**dadurch gekennzeichnet, daß** ein Verknüpfungsglied, das zur Bildung eines Partialproduktbits dient, und ein Volladdierer, in dem dieses Partialproduktbit mit einem Summensignal und gegebenenfalls mit einem Übertragssignal addiert wird, jeweils in zwei getrennten Zellen (Z23, Z33) angeordnet sind, die in unterschiedlichen Zeilen liegen, daß die Zeile der den Volladdierer enthaltenden Zelle (Z33) der Zeile der das Verknüpfungsglied enthaltenden Zelle (Z23) jeweils nachgeordnet ist, und daß der Ausgang des Verknüpfungsgliedes über eine Verbindungsleitung (58) an einen Eingang des Volladdierers geführt ist, in die eine Schieberegisterstufe (59) eingefügt ist, die zur Zwischenspeicherung des gebildeten Partialproduktbits dient.

2. Zellenstrukturierter digitaler Multiplizierer nach Anspruch 1, **dadurch gekennzeichnet,** daß die das Verknüpfungsglied enthaltende Zelle (Z23) und die den Volladdierer enthaltende Zelle (Z33) jeweils unmittelbar hintereinander an ein und demselben Übertragspfad (7) liegen.

3. Zellenstrukturierter digitaler Multiplizierer nach Anspruch 1 oder 2, **dadurch gekennzeichnet,** daß die in der ersten Zeile angeordneten Zellen (Z11 bis Z14) neben einem ersten Verknüpfungsglied (64) für die Bildung der den Zellen (Z21 bis Z24) der zweiten Zeile zugeordneten Partialproduktbits jeweils ein zweites Verknüpfungsglied (63a) für die Bildung der ihnen zugeordneten Partialproduktbits enthalten und daß die Ausgänge der zweiten Verknüpfungsglieder (63a) mit den Summenpfaden (15, 12, 11, 10) verbunden sind.

4. Zellenstrukturierter digitaler Multiplizierer nach Anspruch 3, **dadurch gekennzeichnet,** daß an den Ausgängen der zweiten Verknüpfungsglieder (63a) der in der ersten Zeile angeordneten Zellen (Z11 bis Z14) jeweils Schieberegisterstufen (66) vorgesehen sind.

5. Zellenstrukturierter digitaler Multiplizierer nach einem der vorhergehenden Ansprüche, **dadurch gekennzeichnet,** daß in die zweiten Eingangsleitungen (ZL0 bis ZL3) jeweils Treiberschaltungen (50 bis 53) eingefügt sind, die ausgangsseitig zu den weiteren Schieberegisterstufen (42) liegen.

6. Zellenstrukturierter digitaler Multiplizierer nach einem der vorhergehenden Ansprüche, **dadurch gekennzeichnet,** daß die Schieberegisterstufen (37, 38, 39, 63) jeweils aus der Serienschaltung eines ersten Feldeffekttransistors (75), eines ersten Inverters (76), eines zweiten Feldeffekttransistors (77) und eines zweiten Inverters (78) bestehen, wobei die Gates der ersten bzw. zweiten Feldeffekttransistoren (75, 77) sämtlicher an den Ausgängen der Zellen einer Zeile angeordneter Schieberegisterstufen (37, 38, 39, 63) über jeweils eine gemeinsame Leitung (79 bzs. 81) ansteuerbar sind.

### Claims

1. Cell-structured, digital multiplier of semisystolic construction,

in which all the bits of a multiplicand are AND-gated to in each case one bit of a multiplier to form a group of partial product bits, and one such group is formed for each multiplier bit,

in which cells arranged in a first row are individually assigned to a first group of partial product bits which consists of all multiplicand bits, in each case AND-gated with the lowest-order multiplier bit,

in which cells lying in further subsequent rows are assigned to further groups of partial product bits, the cells of each further row being individually assigned to the partial product bits formed by an AND-gating of all the multiplicand bits with a single multiplier bit, and the value of the respective multiplier bit used increases from row to row ;

in which first input lines occupied by the multiplicand bits extend to said assigned cells,

in which second input lines occupied by the multiplier bits are provided, each of which extends to all the cells contained in a row which are assigned to the multiplier bit supplied via said input lines,

in which sum paths are provided which extend via those cells assigned to the partial product bits of equal value which are to be added to each other,

in which carry paths are provided, which extend via those cells assigned to partial product bits of increasing value which are to be added to each other,

in which there is provided in the cells in each case a full adder which serves for the addition of a sum signal supplied via a sum path to, if appropriate, a carry signal supplied via a carry path and to the partial product bit assigned to the cell,

in which there is provided in the cells in each case a logic element which serves for the AND-gating of a multiplicand bit with a multiplier bit,

in which the cells contain shift register stages which are connected downstream of the sum output and the carry output of the full adder,

in which further shift register stages are inserted into the first and second input lines in such a way that all the input lines extending to the cells of a row in each cases contain at most a number of further shift register stages corresponding to the number of preceding rows, and in which digital signals which can be picked up at the ends of the sum paths and carry paths are combined to form product bits,

characterized in that a logic element, which serves to form a partial product bit, and a full adder, in which said partial product bit is added to a sum signal and, if appropriate, to a carry signal, are arranged in each case in two separate cells (Z23, Z33) lying in different rows, in that the row of the cell (Z33) containing the full adder is in each case connected downstream of the row of the cell (Z23) containing the logic element, and in that the output of the logic element is fed via a connection line (58) to one input of the full adder, into which a shift register stage (59) which serves for the intermediate storage of the partial product bit formed is inserted.

2. Cell-structured, digital multiplier according to Claim 1, characterized in that the cell (Z23) containing the logic element and the cell (Z33) containing the full adder are in each case connected directly following one another to one and the same carry path (7).

3. Cell-structured, digital multiplier according to Claim 1 or 2, characterized in that, in addition to a first logic element (64) for the formation of the partial product bits assigned to the cells (Z21 to Z24) of the second row, the cells (Z11 to Z14) arranged in the first row contain in each case a second logic element (63a) for the formation of the partial product bits assigned to them, and in that the outputs of the second logic elements (63a) are connected to the sum paths (15, 12, 11, 10).

4. Cell-structured, digital multiplier according to Claim 3, characterized in that shift register stages (66) are provided in each case at the outputs of the second logic elements (63a) of the cells (Z11 to Z14) arranged in the first row.

5. Cell-structured, digital multiplier according to one of the preceding claims, characterized in that driver circuits (50 to 53) which are connected on the output side to the further shift register stages (42) are inserted in each case into the second input lines (ZL0 to ZL3).

6. Cell-structured, digital multiplier according to one of the preceding claims, characterized in that the shift register stages (37, 38, 39, 63) consist in each case of the series circuit of a first field-effect transistor (75), of a first inverter (76) of a second field-effect transistor (77) and of a second inverter (78), it being possible to drive the gates of the first and second field-effect transistors (75, 77), respectively, of all shift register stages (37, 38, 39, 63) arranged at the outputs of the cells of a row via a common line (79 or 81) in each case.

## Revendications

1. Multiplicateur numérique à structure cellulaire, possédant une constitution semi-systolique,

dans lequel tous les bits d'un multiplicande sont combinés selon la combinaison ET respectivement avec un bit d'un multiplicateur pour former un groupe de bits de produits partiels et un tel groupe est formé pour chaque bit du multiplicateur, et

dans lequel des cellules disposées dans une première ligne sont associées individuellement à un premier groupe de bits de produits partiels, qui est constitué par tous les bits de multiplicande, qui sont combinés respectivement selon la combinaison ET avec le bit de poids le plus faible du multiplicateur, et

dans lequel des cellules situées dans d'autres lignes successives sont associées à d'autres groupes de bits de produits partiels, les cellules de chaque autre ligne étant associées individuellement aux bits de produits partiels, formés par une combinaison ET de tous les bits de multiplicande avec un seul bit de multiplicateur, et le poids des bits de multiplicateur respectivement utilisés augmente d'une ligne à la suivante ; et

dans lequel des premiers conducteurs d'entrée occupés par les bits de multiplicande sont raccordés aux cellules associées à ces bits, et

dans lequel il est prévu des seconds conducteurs d'entrée, occupés par les bits de multiplicateur et dont chacun est raccordé à toutes les cellules qui sont situées dans une ligne et sont associées au bit de multiplicateur envoyé à ces cellules, et

dans lequel il est prévu des voies de transmission de signaux sommes, qui passent par les cellules qui sont associées aux bits de produits partiels de même poids, qui doivent être additionnés entre eux, et

dans lequel il est prévu des voies de transmission de signaux de report, qui passent par les cellules qui sont associées à des bits de produits partiels devant être additionnés entre eux et possédant un poids croissant, et

dans lequel dans les cellules est prévu respectivement un additionneur complet, qui sert à additionner un signal somme, envoyé par l'intermédiaire d'une voie de transmission de signaux sommes, éventuellement à un signal de report envoyé par l'intermédiaire d'une voie de transmission et un bit de produit partiel associé à la cellule, et

dans lequel dans les cellules est prévu respectivement un circuit combinatoire, qui sert à réaliser la combinaison ET d'un bit de multiplicande et d'un bit de multiplicateur, et dans lequel les cellules contiennent des étages de registres à décalage, qui sont branchés en aval de la sortie du signal somme et de la sortie du signal de report de l'additionneur complet, et

dans lequel d'autres étages de registres à décalage sont insérés dans les premier et second conducteurs d'entrée de telle sorte que tous les conducteurs d'entrée aboutissant aux cellules d'une ligne contiennent respectivement au maximum un nombre d'autres étages de registres à décalage, qui correspond au nombre des lignes précédentes, et

dans lequel des signaux numériques pouvant être prélevés sur les extrémités des voies de transmission de signaux sommes et des voies de transmission de signaux de report sont réunis pour former des bits de produits, caractérisé par le fait qu'un circuit combinatoire, qui sert à former un bit de produit partiel, et un additionneur complet dans lequel un signal somme et éventuellement un signal de report sont ajoutés à ce bit de produit partiel, sont disposés respectivement dans deux cellules séparées (Z23, Z33), situées dans des lignes différentes, que la ligne de la cellule (Z33), qui contient l'additionneur complet, est disposée respectivement en aval de la ligne de la cellule (Z23), qui contient le circuit combinatoire, et que la sortie du circuit combinatoire est raccordée par l'intermédiaire d'une ligne de raccordement (58) à l'entrée de l'additionneur complet, dans lequel est inséré un étage de registre à décalage (59), qui sert à mémoriser temporairement le bit de produit partiel formé.

2. Multiplicateur numérique à structure cellulaire suivant la revendication 1, caractérisé par le fait que la cellule (Z23) contenant le circuit combinatoire et la cellule (Z33) contenant l'additionneur complet sont situées directement l'une derrière l'autre dans une même voie (7) de transmission d'un signal de report.

3. Multiplicateur numérique à structure cellulaire suivant la revendication 1 ou 2, caractérisé par le fait que les cellules (Z11 à Z14) situées dans la première ligne contiennent, en-dehors d'un premier circuit combinatoire (64) servant à former les bits de produits partiels associés (Z21 à Z24) de la seconde ligne, respectivement un second circuit combinatoire (63a) servant à former les bits de produits partiels, qui sont associés à ces cellules, et que les sorties des seconds circuits combinatoires (63a) sont reliées aux voies (15, 12, 11, 10) de transmission de signaux sommes.

4. Multiplicateur numérique à structure cellulaire suivant la revendication 3, caractérisé par le fait que des étages de registres à décalage (66) sont prévus respectivement sur les sorties des deux circuits combinatoires (63a) des cellules (Z11 à Z4) situées dans la première ligne.

5. Multiplicateur numérique à structure cellulaire suivant l'une des revendications précédentes, caractérisé par le fait que dans les seconds conducteurs d'entrée (ZL0 à ZL3) sont insérés respectivement des circuits d'attaque (50 à 53), qui sont raccordés, côté sortie, aux autres étages de registres à décalage (42).

6. Multiplicateur numérique à structure cellulaire suivant l'une des revendications précédentes, caractérisé par le fait que les étages de registres à décalage (37, 38, 39, 63) sont constitués respectivement par le circuit série formé d'un premier transistor à effet de champ (75), d'un premier inverseur (76), d'un second transistor à effet de champ (77) et d'un second inverseur (78), les grilles des premier et second transistors à effet de champ (75, 77) de tous les étages de registres à décalage (37, 38, 39, 63) raccordés aux sorties des cellules d'une ligne, pouvant être commandées respectivement par l'intermédiaire d'une ligne commune (79 ou 81).

FIG 1

10

FIG 2

FIG 4

FIG 5

# FIG 6

FIG 3